# EUROPEAN PATENT SPECIFICATION

(11) **EP 2 495 388 B1**
(45) Date of publication and mention of the grant of the patent: **20.06.2018**
(21) Application number: 12157834.8
(22) Date of filing: 02.03.2012
(51) Int. Cl.: E21B 3/02, E21B 7/02, F16H 57/04

(54) **Drilling head for drilling machines**
Bohrkopf für Bohrmaschinen
Tête de perceuse pour machines de forage

(30) Priority: 02.03.2011 IT UD20110027
(43) Date of publication of application: 05.09.2012
(73) Proprietor: CASAGRANDE SpA, 33074 Fontanafredda (PN) (IT)
(72) Inventor: Casagrande, Mauro, 33077 Sacile (PN) (IT)
(74) Representative: Petraz, Gilberto Luigi

(56) References cited:
- EP-A2- 0 994 234
- AU-B2- 463 416
- US-A- 3 454 114

## Description

### FIELD OF THE INVENTION

The present invention concerns a drilling head which can be applied to drilling machines, such as drills, milling cutters or similar or comparable apparatuses.

### BACKGROUND OF THE INVENTION

In the field of drilling machines, it is known to use drilling heads comprising a box-like structure inside which speed reduction means are housed, which are associated on one side to a motor of the hydraulic type suitable to supply the input motion to the reduction means and on the other side to a tool such as for example a milling cutter or a drill which work at a lower rotation speed than that of the hydraulic motor.

A drilling head is known in which, a differential is disposed inside the box-like structure which by means of gears allows to select several ratio transmissions between the motor and the tool.

This solution not only has a very poor mechanical performance but also has the disadvantage of being very bulky, as well as requiring a lot of maintenance interventions also given the high number of components of which it is made.

A drilling head is also known, for example from document EP 0.994.234, comprising a box-like body inside which there are first reduction means, with toothed wheels having parallel axes and with a straight toothed profile.

To achieve the desired transmission ratio between the hydraulic motor and the tool, at the same time maintaining a reduced bulk of the box-like body, second reduction means of the epicycloidal type are associated to the first reduction means, outside the box-like body.

It is in fact known that epicycloidal type reducers allow to achieve high transmission ratios with contained bulk of the wheels.

Specifically, the second reduction means are disposed inside a containing casing and are provided with a first transmission shaft connected to the hydraulic motor and a second drive shaft which is connected to the first reduction means by means of a same-shape coupling.

The first casing is provided with connection flanges suitable to be connected to mating connection flanges present in the box-like body in which the first reduction means are housed.

Although it provides to use an epicycloidal reducer coupled to a transmission with toothed wheels with parallel axes, this solution is still too voluminous.

From document US 3.454.114, also referred to in AU 463416, a drilling head for drilling machines is known, which comprises a motor provided to transfer the motion to a drilling tool. The motor and the drilling tool are disposed coaxial to each other and transmission devices are interposed between them in order to reduce the number of revolutions. The transmission devices comprise a plurality of reduction units all of the epicycloidal type connected kinematically with each other to achieve the desired reduction ratio. The drilling head described in this document is particularly complex to make, as well as having great bulk, above all in an axial direction, which is disadvantageous for the application with current drilling machines.

Another disadvantage of the solution just described is the need to provide lubrication circuits for the purpose which provide independent lubrication of the first and second reduction means. Indeed, given that the first and second reduction means are disposed in closed containing bodies which are independent from each other, it is necessary to provide, for each of them, independent lubrication circuits with consequent production and maintenance expenses.

Another disadvantage is that the reduction heads described above are too inefficient and noisy during functioning.

One purpose of the present invention is to obtain a drilling head for drilling machines which is less bulky, efficient and silent.

Another purpose is to obtain a drilling head which reduces the number of maintenance interventions on the moving mechanical parts inside the head.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a drilling head for drilling machines comprises a box-like body suitable to contain transmission devices of the type with toothed wheels, suitable in their turn to transfer the motion from at least a motor member associated to the box-like body to a drilling tool such as a drill, a milling cutter, a chisel or other, and to reduce the rotation speed of the motor member in order to obtain a higher drive torque on the tool.

According to one feature of the present invention, inside the box-like body the transmission means comprise first transmission means of the epicycloidal type, suitable to receive the motion from at least a motor member, and to define a first speed reduction stage, and second transmission means with toothed wheels having parallel axes, connected kinematically to the first transmission means, suitable to transfer the motion to a transmission shaft which is connected to the drilling tool, and defining a second speed reduction stage.

The first and the second transmission means are both disposed inside the box-like body which is provided on a first side with connection means, for example flanges, to connect with the motor member, and on a second side, substantially opposite and in any case different from the first, with second connection means, for example grooved shafts, coupling seatings or similar, to which the drilling tool is associated.

According to one form of embodiment of the present invention, the second transmission means comprise at least a pinion toothed wheel connected kinematically to the first transmission means, and a driven toothed wheel associated to the transmission shaft and disposed with its axis parallel to that of the pinion toothed wheel. The at least one pinion toothed wheel and the driven toothed wheel are of the helicoidal type, which gives the advantage of silence and continuity of transmission, and also means that they last longer.

According to a variant form of embodiment, the drilling head comprises two motor members suitable to transmit the motion respectively to two of the first transmission means of the epicycloidal type and the second transmission means comprise two pinion toothed wheels, each of which is kinematically connected to a respective one of the first transmission means, and to the only driven toothed wheel of the second transmission means.

This solution allows to use two motor members with half the power compared with using a single motor member, or to use a motor of smaller size compared to a single motor member.

According to one feature of the present invention, the first transmission means comprise a sun toothed wheel, a plurality of satellite toothed wheels, and an external toothed crown.

According to another form of embodiment, the pinion toothed wheel of the second transmission means comprises a first part on which teeth are made, suitable to engage with respective teeth of the driven toothed wheel, and a second part which is internally hollow and suitable to house the sun toothed wheel of the first transmission means. The satellite toothed wheels of the first transmission means are disposed rotating in respective apertures made in the second part of the pinion toothed wheel, and suitable to couple both with the sun toothed wheel and with a fixed toothed crown which is external to the satellite toothed wheels. This particular conformation allows to use the body of the pinion, and in particular its second part, as a support element, or satellite carrier, of the satellite toothed wheels, and therefore to obtain a reduction in the spaces taken up.

According to another advantageous form of embodiment, the box-like body defines a single closed chamber suitable to contain a lubrication fluid, for example lubrication oil, to lubricate both the first transmission means and the second transmission means.

According to another form of embodiment, the teeth of the first part of the pinion toothed wheel are defined by grooves which affect both the surface of the first part and of the second part. In the first part the grooves define the teeth, distancing one from the next according to a desired development, advantageously helicoidal. In the second part the grooves extend beyond the length of the teeth of the first part, each defining over all a respective lubrication channel which puts the first part into fluidic communication with the second part. This particular conformation is advantageous in the case where the components are lubricated in a bath of oil. In this case, the pinion toothed wheel or wheels, which engage with the driven toothed wheel, exert a pumping action of the oil which is conveyed toward parts not lubricated.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral view of a drilling machine in which a drilling head according to the present invention is applied;

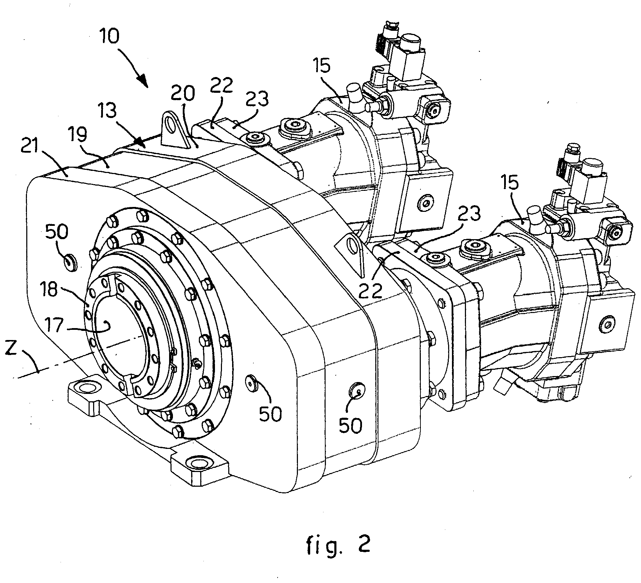

- fig. 2 is a perspective view of the drilling head according to the invention;
- fig. 3 is a section view of a detail of the drilling head in fig. 2;

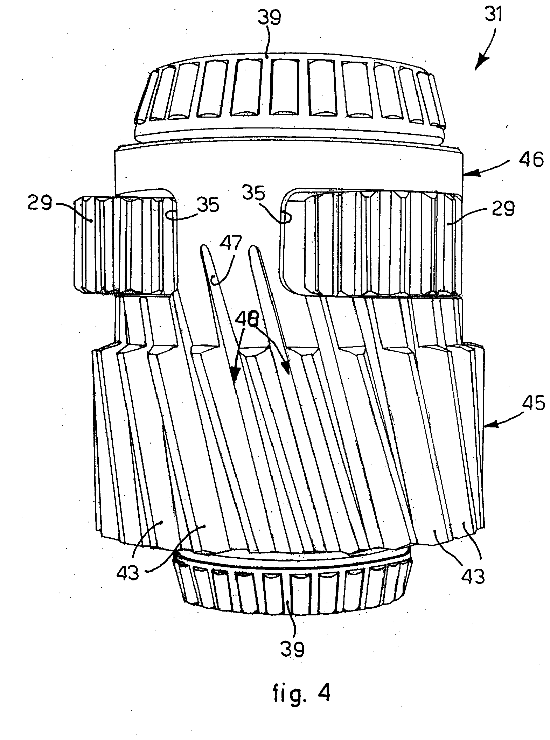

- fig. 4 is a perspective view of a detail of fig. 3.

To facilitate comprehension, the same reference numbers have been used, where possible, to identify identical common elements in the drawings.

### DETAILED DESCRIPTION OF A PREFERENTIAL FORM OF EMBODIMENT

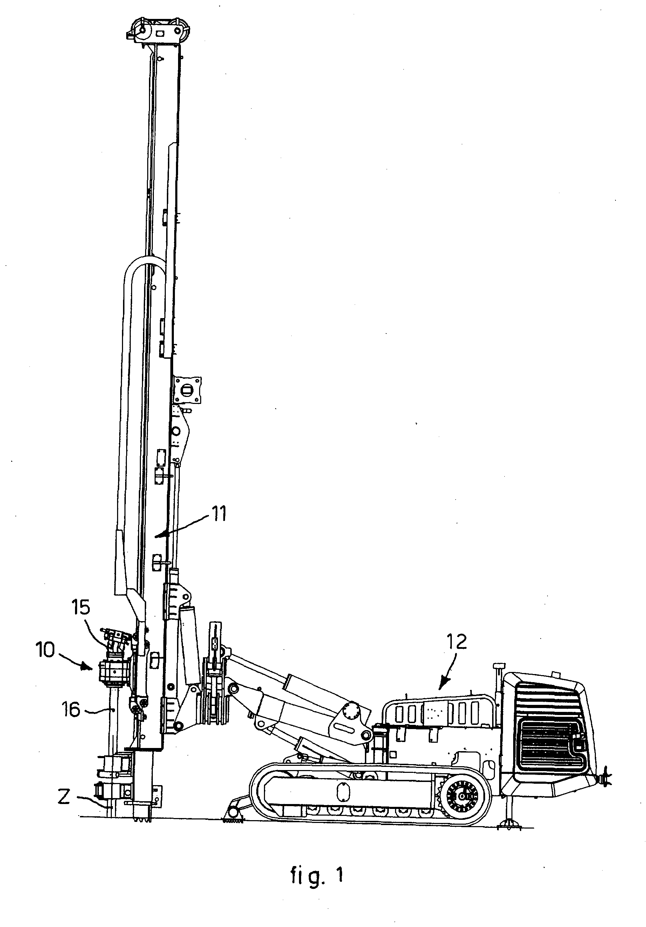

With reference to the attached drawings, a drilling head according to the present invention is indicated in its entirety by the reference number 10 and is associated in sliding manner to a frame 11 of a drilling machine 12 (fig. 1).

The drilling head 10 comprises a box-like body 13 inside which there are motion transmission devices suitable to transfer the motion from at least a motor member, in this case two hydraulic motors 15, to a drilling tool 16 which is associated to the drilling head in proximity to a coupling seating 17 made in a transmission shaft 18.

The box-like body 13 comprises a peripheral wall 19 to which a first closing cover 20 and a second closing cover 21 are associated by means of threaded connection means.

In this case, the first cover 20 is provided with two first flanges 22 made in a single body therewith and each suitable to couple with a respective second flange 23 of the hydraulic motors 15 to provide the reciprocal coupling of the latter with the box-like body 13.

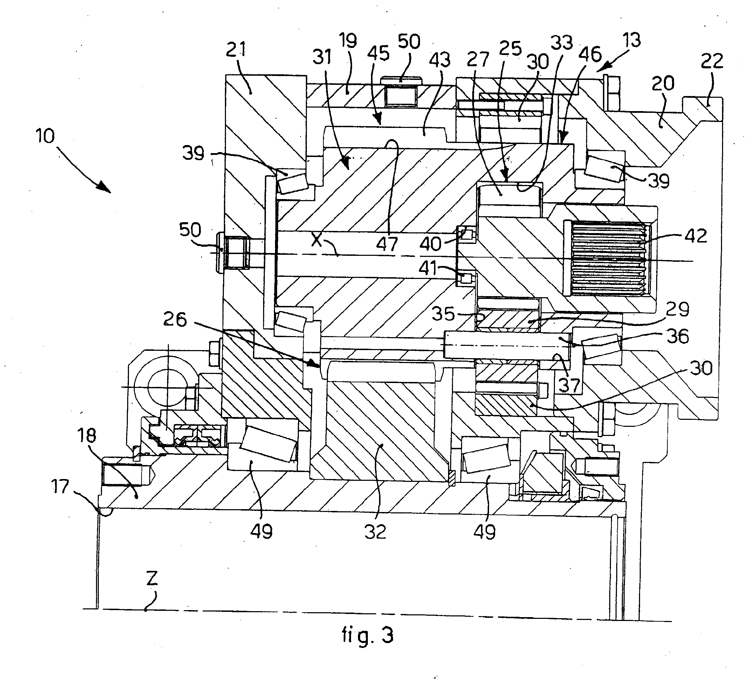

First transmission means 25 and second transmission means 26, kinematically connected to each other, are housed inside the box-like body 13 (fig. 3). The first are suitable to receive the motion from each of the hydraulic motors 15, while the second are suitable to transmit the motion to the tool 16 around an axis of rotation Z.

With reference to fig. 3, in which only half of the drilling head 10 is shown, given that the whole is symmetrical to the axis of rotation Z, the first transmission means 25 are of the epicycloidal type and comprise a first epicycloidal reduction unit and a second epicycloidal reduction unit, both with straight teeth associated respectively to each motor 15.

Each epicycloidal reduction unit comprises a sun toothed wheel or sun wheel 27, three satellite wheels or satellites 29, and a toothed crown 30.

The hydraulic motors 15 must have a rotation speed suitably synchronized so as to prevent them from functioning in an unbalanced manner. To this purpose each is provided, in a known manner, with hydraulic speed synchronization devices.

The second transmission means 26 are a kinematic transmission with toothed wheels having parallel axes and comprise two pinion toothed wheels, or pinions 31 (only one of which is shown in fig. 3) to which the satellites 29 are associated, and a driven toothed wheel, or driven wheel 32, on which both pinions 31 engage in order to make the tool 16 rotate when coupled in the coupling seating 17.

Each pinion 31 is hollow inside, to allow to house the solar wheel 27 inside a mating circular seating 33 coaxial to the pinion 31.

The pinion 31 comprises a first part 45 in which the toothing is made, and a second part 46 provided with three apertures 35, made laterally to its circumferential development and suitable to allow to house the three satellites 29 which in their turn are constrained to rotate around a respective pin 36. In particular the pin 36 is fixed to the pinion 31 in a corresponding seating 37 made in proximity to the aperture 35.

The second part 46 of the pinion 31 is therefore configured to act as a satellite carrier element, and in particular supports the satellites 29 of the first transmission means 25.

The pinion 31 is mounted rotatable on thrust-block bearings 39 associated respectively to the first cover 20 and the second cover 21, and rotates around an axis X parallel to the axis of rotation Z.

In particular, each hydraulic motor 15 is associated to the box-like body 13 so as to transmit the motion to the first transmission means 25 according to the axis X, while the drilling tool 16 is associated to the coupling seating 17 so as to rotate around the axis of rotation Z which is parallel to the axis X.

In the circular seating 33 of the pinion 31 a housing 40 is made for a radial bearing 41 which is suitable to support the solar wheel 27 and make it rotate around the axis X.

The solar wheel 27 is provided, at one of its ends, with a coupling seating 42 with a grooved profile which allows a same-shape coupling with the shaft of the hydraulic motor 15.

The solar wheel 27 in its turn engages on the three satellites 29 which are mounted equidistant advantageously at 120° with respect to each other, inside the apertures 35 made on the pinion 31.

Each of the three satellites 29, protruding from the three apertures 35, couple in their turn with the toothed crown 30 to obtain the desired transmission ratio, which in this case, merely to give an example, is 4.13.

The toothed crown 30 is fixed with threaded connection means to a fixed part of the lateral wall 19.

In this case, unlike the epicycloidal reducers commonly used, the pinion 31 of the second transmission means 26 acts as a satellite carrier element for the satellites 29 of the first transmission means 25.

This particular configuration of the second transmission means 26 allows to obtain an extremely compact drilling head 10.

The first part 45 of the pinion 31 comprises a plurality of teeth 43 with a helicoidal profile which in their turn engage on the driven toothed wheel 32 to obtain a further reduction in speed. In this case the transmission ratio of the pinion 31 with the driven toothed wheel 32, merely to give an example, is equal to 2.0, that is, the driven wheel 32 has a nominal diameter which is double that of the pinion 31.

Each tooth 43 of the pinion 31 is defined by a pair of grooves 47 which extend beyond the extension of the profile of the tooth 43 and toward the second part 46 of the pinion 31, in this way defining a lubricating channel 48 which puts the first part 45 in fluidic communication with the second part 46.

In particular, the profile of the teeth 43 with a helicoidal development is made by means of milling with a hob and, by making the latter follow an extra travel, the lubricating channel 48 is defined which protrudes with respect to the extension of the profile of the tooth 43.

The driven wheel 32 is keyed in a known manner to the transmission shaft 18 in order to rotate them both, solidly with each other around the axis of rotation Z.

The transmission shaft 18 rotates around the axis of rotation Z on thrust-block bearings 49 associated in suitable housings made both in the first cover 20 and in the second cover 21.

The box-like body 13 is suitable to contain, in a known manner, lubricating oil to provide the lubrication of the various moving parts.

The box-like body 13 is provided with topping-up stoppers 50 suitable to allow the addition or replacement of lubricating oil.

The box-like body 13, for reasons of thermal expansion, is not completely filled with the lubricating oil, so that when the machine is stopped only some of the components housed in the box-like body 13 are immersed in the bath of lubricating oil.

Given that the box-like body 13 is suitable to contain both the first 25 and the second transmission means 26, and since these are contained in a single compartment, it is not necessary to provide independent lubricating as provided in the state of the art.

The drilling head 10 is normally made to work keeping its axis of rotation Z vertical and with the motors facing upward; this working configuration would cause some rotating parts, such as for example the bearing 39 disposed in proximity to the first flange 22, to be not suitably lubricated. However, given the particular conformation of the grooves 47 of the teeth 43 of the pinion 31, which are completely immersed in the lubricating oil, it is also possible to convey the oil toward the upper part of the drilling head 10, guaranteeing an optimal lubrication.

Specifically, given the helicoidal development of the teeth of the driven wheel 32 which engage with the mating teeth 43 of the pinion 31, the latter exert, on the oil which is found between corresponding engaging teeth, a thrust action which is directed toward the second part 46 of the pinion 31 where the bearing 39 is housed. The groove 47 functions as a channel to convey the oil toward the parts that are not in the bath of oil.

Hydraulic seal members are associated with the rotating parts and to the parts interconnected with each other, to prevent leakages of lubricating oil toward the outside.

The particular symmetrical conformation of the first and second transmission means 25 and 26 with respect to the axis of rotation Z allows to achieve a totally balanced reduction in speed, even in terms of the bending stresses acting on the transmission shaft 18.

To this end it is therefore advantageous to use two hydraulically synchronized hydraulic motors which in their turn also allow a reduction in bulk of the drilling head, compared with using a single hydraulic motor with double power but also twice as bulky.

It is clear that modifications and/or additions of parts may be made to the device to reduce rotation speed as described heretofore, without departing from the field and scope of the present invention.

It is also clear that, although the present invention has been described with reference to some specific examples, a person of skill in the art shall certainly be able to achieve many other equivalent forms of device to reduce rotation speed, having the characteristics as set forth in the claims and hence all coming within the field of protection defined thereby.

## Claims

1. Drilling head for drilling machines comprising at least a motor member (15), a drilling tool (16) and transmission devices (25, 26) of the toothed wheel type, provided to transfer the motion from said motor member (15) to said drilling tool (16), and to reduce the rotation speed of said motor member (15), said transmission devices comprising first transmission means (25) of the epicycloidal type, defining a first speed reduction stage and suitable to receive the motion from said motor member (15), and second transmission means (26) with toothed wheels having parallel axes, defining a second speed reduction stage and suitable to receive the motion from said first transmission means (25) and to transmit it to said drilling tool (16) **and characterized in that** it also comprises a box-like body (13), substantially closed and defining a chamber inside which said first (25) and said second (26) transmission means are disposed, said box-like body (13) comprising a peripheral wall (19) and being provided with connection means (22) on its first side in order to connect to said motor member (15), and with second connection means (17) on its second side, substantially opposite and in any case different from the first side, with which said drilling tool (16) is associated, wherein said first transmission means (25) are of the epicycloidal type and comprise a sun toothed wheel (27), a plurality of satellite wheels (29) and a toothed crown (30) which is external with respect to said satellite wheels (29) and that is fixed with threaded connection means to a fixed part of said peripheral wall (19).

2. Drilling head as in claim 1, **characterized in that** said box-like body (13) defines a single closed chamber suitable to contain a lubrication fluid suitable to lubricate both said first transmission means (25) and said second transmission means (26).

3. Drilling head as in claim 1 or 2, **characterized in that** to said peripheral wall (19) a first closing cover (20) is associated on one side and a second closing cover (21) is associated on the other side.

4. Drilling head as in any claim hereinbefore, **characterized in that** said second transmission means (26) comprise at least a pinion toothed wheel (31) connected kinematically to said first transmission means (25) and a driven toothed wheel (32) associated to said transmission shaft (18), **and in that** said at least one pinion toothed wheel (31) and said driven toothed wheel (32) are of the helicoidal type.

5. Drilling head as in any claim from 1 to 3, **characterized in that** it comprises two motor members (15) suitable to transmit the motion respectively to two of said first transmission means (25), **and in that** said second transmission means (26) comprise two pinion toothed wheels (31), each of which is kinematically connected to one of said first transmission means (25), and a driven toothed wheel (32) associated to said transmission shaft (18) and coupled with said two pinion toothed wheels (31), said pinion toothed wheels (31) and said driven toothed wheel (32) being of the helicoidal type.

6. Drilling head as in claim 4 or 5, **characterized in that** said pinion toothed wheel (31) comprises a first part (45) on which teeth (43) are made, suitable to engage with respective teeth of the driven toothed wheel (32), and a second part (46), provided with a seating (33) suitable to house said sun toothed wheel (27) of said first transmission means (25), **and in that** said satellite toothed wheels (29) are disposed in respective apertures (35) made in said second part (46), and suitable to couple both with said sun toothed wheel (27) and with said fixed toothed crown (30).

7. Drilling head as in claim 6, **characterized in that** said teeth (43) of the first part (45) of the pinion toothed wheel (31) are defined by grooves (47) which affect both the surface of the first part (45) and of the second part (46), **and in that** said grooves (47) extend beyond the length of said teeth (43), each defining a respective lubrication channel (48) which puts the first part (45) into fluidic communication with the second part (46).

8. Drilling head as in any claim hereinbefore, **characterized in that** said at least one motor member (15) is associated to said box-like body (13) so as to transmit the motion to said first transmission means (25) according to a first axis of rotation (X), and said drilling tool (16) is associated to said second connection means (17) so as to rotate around a second axis of rotation (Z) parallel to said first axis of rotation (X).

## Patentansprüche

1. Bohrkopf für Bohrmaschinen mit wenigstens einem Motorelement (15), einem Bohrwerkzeug (16) und Übertragungsvorrichtungen (25, 26) vom Zahnradtyp, die zum Übertragen der Bewegung von dem Motorelement (15) zu dem Bohrwerkzeug (16) und zum Reduzieren der Drehgeschwindigkeit des Motorelements (15) vorgesehen sind, wobei die Übertragungsvorrichtungen eine erste Übertragungseinrichtung (25) vom Epizykloid-Typ, die eine erste Geschwindigkeitsreduktionsstufe definiert und dazu geeignet ist, die Bewegung von dem Motorelement (15) aufzunehmen, und eine zweite Übertragungseinrichtung (26) mit Zahnrädern mit parallelen Achsen aufweisen, die eine zweite Geschwindigkeitsreduktionsstufe definiert und dazu geeignet ist, die Bewegung von der ersten Übertragungseinrichtung (25) aufzunehmen und sie an das Bohrwerkzeug (16) zu übertragen, **dadurch gekennzeichnet, dass** er außerdem einen kastenartigen Körper (13) aufweist, der im Wesentlichen geschlossen ist und eine Kammer eingrenzt, in der die erste (25) und die zweite (26) Übertragungseinrichtung angeordnet sind, wobei der kastenartige Körper (13) eine Umfangswand (19) aufweist und mit einer Verbindungseinrichtung (22) an seiner ersten Seite für den Anschluss an das Motorelement (15) und einer zweiten Verbindungseinrichtung (17) auf seiner zweiten Seite versehen ist, die im Wesentlichen entgegengesetzt und in jedem Fall verschieden von der ersten Seite ist, die mit dem Bohrwerkzeug (16) verbunden ist, wobei die erste Übertragungseinrichtung (25) vom Epizykloid-Typ ist, und ein Sonnenzahnrad (27), mehrere Planetenräder (29) und einen Zahnkranz (30) umfasst, der außerhalb der Planetenräder (29) liegt und mit Gewindeverbindungsmitteln an einem festen Teil der Umfangswand (19) befestigt ist.

2. Bohrkopf nach Anspruch 1, **dadurch gekennzeichnet, dass** der kastenartige Körper (13) eine einzige geschlossene Kammer eingrenzt, die dazu geeignet ist, ein Schmierfluid zu enthalten, das zum Schmieren sowohl der ersten Übertragungseinrichtung (25) als auch der zweiten Übertragungseinrichtung (26) geeignet ist.

3. Bohrkopf nach Anspruch 1 oder 2, **dadurch gekennzeichnet, dass** an der Umfangswand (19) eine erste Schließabdeckung (20) an einer Seite und eine zweite Schließabdeckung (21) an der anderen Seite angeordnet ist.

4. Bohrkopf nach einem der vorstehenden Ansprüche, **dadurch gekennzeichnet, dass** die zweite Übertragungseinrichtung (26) wenigstens ein kinematisch an die erste Übertragungseinrichtung (25) angeschlossenes Kleinzahnrad (31) und ein mit der Antriebswelle (18) verbundenes angetriebenes Zahnrad (32) aufweist, **und dadurch, dass** das wenigstens eine Kleinzahnrad (31) und das angetriebene Zahnrad (32) vom Spindel-Typ sind.

5. Bohrkopf nach einem der Ansprüche 1 bis 3, **dadurch gekennzeichnet, dass** er zwei Motorelemente (15) aufweist, die dazu geeignet sind, die Bewegung auf jeweils zwei der ersten Übertragungseinrichtungen (25) zu übertragen, **und dadurch, dass** die zweite Übertragungseinrichtung (26) zwei Kleinzahnräder (31), die jeweils kinematisch an die erste Übertragungseinrichtung (25) angeschlossen sind, und ein angetriebenes Zahnrad (32) aufweist, das mit der Übertragungswelle (18) verbunden und mit den zwei Kleinzahnrädern (31) gekoppelt ist, wobei die Kleinzahnräder (31) und die angetriebenen Zahnräder (32) vom Spindel-Typ sind.

6. Bohrkopf nach Anspruch 4 oder 5, **dadurch gekennzeichnet, dass** das Kleinzahnrad (31) einen ersten Teil (45), auf dem Zähne (43) geeignet zum Eingriff mit entsprechenden Zähnen des angetriebenen Zahnrads (32) hergestellt sind, und einen zweiten Teil (46) aufweist, der mit einer Aufnahme (33) versehen ist, die dazu geeignet ist, das Sonnenzahnrad (27) der ersten Übertragungseinrichtung (25) aufzunehmen, **und dadurch, dass** die Planetenzahnräder (29) in entsprechenden Öffnungen (35) angeordnet sind, die in dem zweiten Teil (46) hergestellt sind und die dazu geeignet sind, sowohl mit dem Sonnenzahnrad (27) als auch mit dem festen Zahnkranz (30) gekoppelt zu werden.

7. Bohrkopf nach Anspruch 6, **dadurch gekennzeichnet, dass** die Zähne (43) des ersten Teils (45) des Kleinzahnrads (31) durch Nuten (47) definiert sind, die die Fläche sowohl des ersten Teils (45) als auch des zweiten Teils (46) beeinflussen, **und dadurch, dass** die Nuten (47) über die Länge der Zähne (43) hinausgehen, die jeweils einen zugehörigen Schmierstoffkanal (48) eingrenzen, der den ersten Teil (45) in Fluidkommunikation mit dem zweiten Teil (46) bringt.

8. Bohrkopf nach einem der vorstehenden Ansprüche, **dadurch gekennzeichnet, dass** wenigstens ein Motorelement (15) dem kastenartigen Körper (13) zugeordnet ist, so dass die Bewegung zu der ersten Übertragungseinrichtung (25) gemäß einer ersten Drehachse (X) übertragen wird, und das Bohrwerkzeug (16) der zweiten Verbindungseinrichtung (17) zugeordnet ist, so dass es um eine zweite Drehachse (Z) parallel zu der ersten Drehachse (X) rotiert.

## Revendications

1. Tête de forage pour machines de forage comprenant au moins un organe moteur (15), un outil de forage (16) et des dispositifs de transmission (25, 26) du type à roues dentées, prévus pour transférer le mouvement dudit organe moteur (15) audit outil de forage (16), et pour réduire la vitesse de rotation dudit organe moteur (15), lesdits dispositifs de transmission comprenant des premiers moyens de transmission (25) du type épicycloïdal, définissant un premier étage de réduction de vitesse et approprié pour recevoir le mouvement dudit un organe moteur (15), et des deuxièmes moyens de transmission (26) avec des roues dentées ayant des axes parallèles, définissant un deuxième étage de réduction de vitesse et approprié pour recevoir le mouvement desdits premiers moyens de transmission (25) et pour le transmettre audit outil de forage (16) et **caractérisé en ce qu'**il comprend également un corps (13) en forme de boîte, sensiblement fermé et définissant une chambre à l'intérieur de laquelle sont disposés lesdits premier (25) et deuxième (26) moyens de transmission, ledit corps (13) en forme de boîte comprenant une paroi périphérique (19) et étant muni de moyens de liaison (22) sur son premier côté pour être reliés audit organe moteur (15), et de deuxièmes moyens de liaison (17) sur son deuxième côté, sensiblement opposé et en tout cas différent du premier côté, auxquels est associé ledit outil de forage (16), lesdits premiers moyens de transmission (25) étant du type épicycloïdal et comprenant une roue dentée solaire (27), une pluralité de roues satellites (29) et une couronne dentée (30) qui est extérieure par rapport auxdites roues satellites (29) et qui est fixée avec des moyens de liaison filetés à une partie fixe de ladite paroi périphérique (19).

2. Tête de forage selon la revendication 1, **caractérisée en ce que** ledit corps (13) en forme de boîte définit une chambre fermée unique apte à contenir un fluide de lubrification approprié pour lubrifier à la fois lesdits premiers moyens de transmission (25) et lesdits deuxièmes moyens de transmission (26).

3. Tête de forage selon la revendication 1 ou la revendication 2, **caractérisée en ce qu'**un premier couvercle de fermeture (20) est associé à ladite paroi périphérique (19) sur un côté et un deuxième couvercle de fermeture (21) est associé sur l'autre côté.

4. Tête de forage selon l'une quelconque des revendications précédentes, **caractérisée en ce que** lesdits deuxièmes moyens de transmission (26) comprennent au moins une roue dentée (31) formant pignon reliée cinématiquement auxdits premiers moyens de transmission (25) et une roue dentée (32) entraînée associée audit arbre de transmission (18), et **en ce que** ladite au moins une roue dentée (31) formant pignon et ladite roue dentée (32) entraînée sont du type hélicoïdal.

5. Tête de forage selon l'une quelconque des revendications 1 à 3, **caractérisée en ce qu'**elle comporte deux organes moteurs (15) aptes à transmettre le mouvement à deux desdits premiers moyens de transmission (25) respectifs, et **en ce que** lesdits deuxièmes moyens de transmission (26) comportent deux roues dentées (31) formant pignon, chacune étant cinématiquement connectée à l'un desdits premiers moyens de transmission (25), et une roue dentée (32) entraînée associée audit arbre de transmission (18) et reliée auxdites deux roues dentées (31) formant pignon, lesdites roues dentées (31) formant pignon et ladite roue dentée (32) entraînée étant du type hélicoïdal.

6. Tête de forage selon la revendication 4 ou la revendication 5, **caractérisée en ce que** ladite roue dentée (31) formant pignon comprend une première partie (45) sur laquelle sont aménagées des dents (43), aptes à coopérer avec des dents respectives de la roue dentée (32) entraînée, et une deuxième partie (46) pourvue d'un siège (33) approprié pour loger ladite roue dentée solaire (27) desdits premiers moyens de transmission (25), et **en ce que** lesdites roues dentées satellites (29) sont disposées dans des ouvertures (35) ménagées dans ladite deuxième partie (46), et aptes à venir en engagement avec à la fois avec ladite roue dentée solaire (27) et avec ladite couronne dentée fixe (30).

7. Tête de forage selon la revendication 6, **caractérisée en ce que** lesdites dents (43) de la première partie (45) de la roue dentée (31) formant pignon sont définies par des rainures (47) affectant à la fois la surface de la première partie (45) et de la deuxième partie (46), et **en ce que** lesdites rainures (47) s'étendent au-delà de la longueur desdites dents (43), chacune définissant un conduit de lubrification (48) qui met la première partie (45) en communication fluidique avec la deuxième partie (46).

8. Tête de forage selon l'une quelconque des revendications précédentes, **caractérisée en ce que** ledit au moins un élément moteur (15) est associé audit corps (13) en forme de boîte de manière à transmettre le mouvement auxdits premiers moyens de transmission (25) selon un premier axe de rotation (X), et ledit outil de forage (16) est associé auxdits deuxièmes moyens de liaison (17) de manière à tourner autour d'un deuxième axe de rotation (Z) parallèle audit premier axe de rotation (X).
